# EUROPEAN PATENT SPECIFICATION

(11) **EP 1 462 008 B1**
(45) Date of publication and mention of the grant of the patent: **03.10.2007**
(21) Application number: 04003622.0
(22) Date of filing: 18.02.2004
(51) Int. Cl.: A23F 5/46

(54) **Beverage based on cream, coffee and flavoured chocolate, and process for preparing the same**
GETRÄNK, BASIEREND AUF SAHNE, KAFFEE UND AROMATISIERTER SCHOKOLADE, SOWIE VERFAHREN ZUR HERSTELLUNG DESSELBEN
BOISSON, BASE SUR DE LA CREME, DU CAFE ET DU CHOCOLAT AROMATISE, ET PROCEDE POUR SA PREPARATION

(30) Priority: 26.03.2003 IT TO20030227
(43) Date of publication of application: 29.09.2004
(73) Proprietor: Zanello, Monica, 10098 Rivoli (TO) (IT)
(72) Inventor: Zanello, Monica, 10098 Rivoli (TO) (IT)
(74) Representative: Garavelli, Paolo

(56) References cited:
- DE-A1- 19 540 014
- US-B1- 6 207 206
- DATABASE WPI Section Ch, Week 199738 Derwent Publications Ltd., London, GB; Class D13, AN 1997-403398 XP002328749 & CN 1 113 114 A (QIN G) 13 December 1995 (1995-12-13)
- ANONYMOUS: "Viennese Coffee" INTERNET ARTICLE, [Online] XP002328748 Retrieved from the Internet: URL:HTTP://WWW.PERFECTENTERTAINING.COM/PAG E1169.HTML>

## Description

The present invention refers to a process for preparing a beverage based on cream, coffee and flavoured chocolate (for example with marrons glacés, macaroons and almonds).

US-B1-6 207 206 discloses flavored instant coffee products having variegated appearance comprising mixtures of different colored agglomerated particles.

DATABASE WPI Section Ch, Week 199738 Derwent Publications Ltd., London, GB; Class D13, AN 1997-403398 XP002328749 & CN 1 113 114 A disclose a coffee beverage comprising coffee, water, white sugar, edible gelatin, antiseptics, cream, cocoa powder, cassia bark powder and haw jam.

DE 195 40 014 A1 discloses a coffee beverage containing coffee, cream and flavoured chocolate.

Internet Article XP002328748 available in URL:http:/www.perfectentertaining.com/page1169.html discloses the way of making a Viennese coffee.

The process for preparing a beverage according to the present invention cannot be found in the prior art, where a mixture of substances of the above-mentioned type, namely cream, coffee and flavoured chocolate with particular flavours, in this case preferably marrons glacés, almonds and macaroons, has never been developed.

Object of the present invention, therefore, is providing a process for preparing a beverage that has a particular flavour deriving from a perfect mixture of the above-mentioned substances, in their preferred variations and types, and that is adapted to be served cold or even hot, providing optimum nutritional and tasty characteristics.

A further object of the present invention is providing a process for preparing the beverage, that is simple, quick and of proven efficiency.

The above and other objects and advantages of the invention, as will appear from the following description, are obtained by a process for preparing the beverage as claimed in Claim 1. Preferred embodiments and non-trivial variations of the present invention are claimed in the dependent Claims. The present invention will be better described by some preferred embodiments thereof, given as a non-limiting example, being in fact possible to widely change both the types of ingredients, and their respective mixtures.

According to the process of the present invention, a beverage is provided whose main characteristic is that it is composed of a mixture of cream, coffee and flavoured chocolate.

In particular, the cream is composed of common long-storage liquid cream, of the so-called U.H.T. (Ultra High Temperature) type. The cream is included in the beverage in an amount of 1.4 litres.

Moreover, the coffee is coffee of any type of origin and mixture, though it is preferable to use the so-called coffee of the "espresso" type. The coffee is included in the beverage in an amount of 0.4 litres.

Still in particular, the flavoured chocolate is composed of common mixtures of powdery cocoa to which particular flavouring substances and products are added. In the preferred embodiment shown, the chosen flavouring substances are marrons glacés, almonds and macaroons, but obviously other flavouring products adapted to provide particular grades of taste to the end beverage, can be used.

As regards the mixture of chocolate and marrons glacés, it is preferably composed of a mixture of chestnut flour, sugar, cocoa, starch, guar seed flour and salt.

Moreover, as stated, the flavoured chocolate can be preferably composed of chocolate and almonds, in which the chocolate with almonds is composed of, still preferably but not limited to, a mixture of almond grains, sugar, cocoa, starch, guar seed flour, salt and flavours.

Still as stated, the flavoured chocolate can be composed of chocolate and macaroons, in which such chocolate with macaroons is preferably composed of a mixture of macaroon grains, sugar, cocoa, starch, guar seed flour, salt and flavours.

In the beverage, the flavoured chocolate is composed of a mixture of chocolate and marrons glacés, chocolate and almonds, chocolate and macaroons in an amount of 120 grams; it is possible to choose any combination of marrons glacés, almonds and macaroons, or to add other similar flavouring substances, as stated above.

The beverage is thus composed of 1.4 litres of cream, 0.4 litres of coffee and 120 grams of flavoured chocolate.

To such mixture, it is also possible to add spreadable chocolate cream. Such cream is commonly commercially available (for example prepared by Companies Caffarel of Luserna San Giovanni, Italy or Ferrero of Alba, Italy), and, in the inventive beverage, it is included in an amount ranging from 4 to 10 grams, preferably from 6 to 8 grams, more preferably 7 grams.

According to the commercially available type, the chocolate cream can be composed of 48% of sugar, 14% of hazels, 10% of powdery skimmed milk, peanut oil, vegetable fat, 6% of powdery lean cocoa, almonds, soy lecithin, vanillina and traces of peanuts; or of sugar, vegetable oils, 13% of hazels, lean cocoa, 5% of powdery skimmed milk, lactose, powdery milk serum, soy lecithin and flavours.

The beverage can also comprise whipped cream, and pieces of marron glacés placed on the whipped cream. In such case, the pieces of marron glacés, also commonly commercially available, are composed of chestnuts, sugar, glucose syrup, vanilla flavour and traces of E220 preservative.

The above-described beverage is prepared with a general innovative process, that comprises the steps of:
- pouring 1.4 litres of cream into a vessel;
- preparing 0.4 liters of coffee apart;
- diluting 120 grams of flavoured chocolate by pouring it in the prepared coffee;
- pouring the coffee with flavoured chocolate into the vessel with cream and smoothly mixing everything; and
- heating the beverage and serving the beverage hot.

The beverage, once having been prepared, could obviously be also stored in a refrigerator and heated upon serving it.

Still in a further detailed variation, the process for preparing the beverage comprises the steps of:
- pouring 1.4 litres of liquid cream of the U.H.T. type into a vessel;
- preparing 0.4 litres of espresso coffee apart;
- diluting, in the prepared espresso coffee, 60 grams of chocolate and marrons glacés, 30 grams of chocolate and almonds and 30 grams of chocolate and macaroons;
- pouring the coffee with chocolate into the vessel with cream and smoothly mixing everything; and
- heating the beverage and serving the beverage hot.

After having prepared the fundamental base of the beverage, the process according to the invention preferably provides that the heated beverage is served in a glass whose upper internal walls and whose upper edge are coated with the spreadable chocolate cream.

Moreover, once having heated and poured the beverage into the glass (or another suitable vessel), before being served, the beverage can be covered with a layer of whipped cream.

And finally, pieces of marrons glacés are placed onto the layer of whipped cream in order to complete the final preferred version with which the beverage is prepared and served to the end user.

## Claims

1. Process for preparing a beverage based on cream, coffee and chocolate with flavours, said process comprising the steps of:
- pouring 1.4 litres of cream into a vessel;
- preparing 0.4 litres of coffee;
- diluting 120 grams of chocolate with flavours in the prepared coffee;
- pouring said coffee with chocolate with flavours into the vessel with cream and smoothly mixing everything; and
- heating the beverage and serving the beverage hot.

2. Process according to Claim 1, **characterised in that** said cream consists in liquid cream of the U.H.T. (Ultra High Temperature) type.

3. Process according to Claim 1, **characterised in that** said coffee is coffee of the "espresso" type.

4. Process according to Claim 1, **characterised in that** said chocolate with flavours consists in chocolate and marrons glacés.

5. Process according to Claim 4, **characterised in that** said chocolate with marrons glacés consists in a mixture of chestnut flour, sugar, cocoa, starch, guar seed flour and salt.

6. Process according to Claim 1, **characterised in that** chocolate with flavours consists in chocolate and almonds.

7. Process according to Claim 6, **characterised in that** said chocolate with almonds consists in a mixture of almond grains, sugar, cocoa, starch, guar seed flour, salt and flavours.

8. Process according to Claim 1, **characterised in that** said chocolate with flavours consists in chocolate and macaroons.

9. Process according to Claim 8, **characterised in that** said chocolate with macaroons consists in a mixture of macaroon grains, sugar, cocoa, starch, guar seed flour, salt and flavours.

10. Process according to Claim 1, **characterised in that** said chocolate with flavours consists in a mixture of chocolate and marrons glacés, chocolate and almonds, chocolate and macaroons.

11. Process according to Claim 1, **characterised in that** it also comprises spreadable chocolate cream.

12. Process according to Claim 1, **characterised in that** it also comprises whipped cream.

13. Process according to Claim 12, **characterised in that** it also comprises pieces of marron glacés placed on the whipped cream.

14. Process according to Claim 13, **characterised in that** said pieces of marron glacés consist in chestnuts, sugar, glucose syrup, vanilla flavour and traces of E220 preservative.

15. Process according to Claim 1, **characterised in that** said heated beverage is served in a glass whose upper internal walls and whose upper edge are coated with the spreadable chocolate cream.

16. Process according to Claims 1, **characterised in that** said beverage, after having been heated, is covered with a layer of whipped cream.

17. Process according to Claim 16, **characterised in that** pieces of marrons glacés are placed onto said layer of whipped cream.

## Patentansprüche

1. Verfahren für die Zubereitung eines Getränks auf der Basis von Sahne, Kaffee und aromatisierter Schokolade, das folgende Phasen einschließt:
- 1,4 Liter Sahne in einen Behälter gießen;
- 0,4 Liter Kaffee zubereiten;
- 120 Gramm aromatisierte Schokolade im zubereiteten Kaffee auflösen;
- den Kaffee mit der aromatisierten Schokolade in den Behälter mit der Sahne gießen, und alles gleichförmig vermischen; und
- das Getränk erhitzen und heiß servieren.

2. Verfahren gemäß Patentanspruch 1, das **dadurch gekennzeichnet ist, dass** die genannte Sahne aus flüssiger Sahne U.H.T. (Ultra High Temperature) besteht.

3. Verfahren gemäß Patentanspruch 1, das **dadurch gekennzeichnet ist, dass** der genannte Kaffee "Espresso-" Kaffee ist.

4. Verfahren gemäß Patentanspruch 1, das **dadurch gekennzeichnet ist, dass** die aromatisierte Schokolade aus Schokolade und Marron Glace besteht.

5. Verfahren gemäß Patentanspruch 4, das **dadurch gekennzeichnet ist, dass** die genannte Schokolade mit Marron Glace aus einer Mischung von Kastanienmehl, Zucker, Kakao, Maisstärke, Guarkernmehl und Salz besteht.

6. Verfahren gemäß Patentanspruch 1, das **dadurch gekennzeichnet ist, dass** die aromatisierte Schokolade aus Schokolade und Mandeln besteht.

7. Verfahren gemäß Patentanspruch 6, das **dadurch gekennzeichnet ist, dass** die genannte Schokolade mit Mandeln aus einer Mischung von Mandelkörnern, Zucker, Kakao, Maisstärke, Guarkernmehl, Salz und Aromastoffen besteht.

8. Verfahren gemäß Patentanspruch 1, das **dadurch gekennzeichnet ist, dass** die aromatisierte Schokolade aus Schokolade und Makronen besteht.

9. Verfahren gemäß Patentanspruch 8, das **dadurch gekennzeichnet ist, dass** die genannte Schokolade mit Makronen aus einer Mischung von Makronenkömem, Zucker, Kakao, Maisstärke, Guarkernmehl, Salz und Aromastoffen besteht.

10. Verfahren gemäß Patentanspruch 1, das **dadurch gekennzeichnet ist, dass** die genannte aromatisierte Schokolade aus einer Mischung von Schokolade und Marron Glace, Schokolade und Mandeln, Schokolade und Makronen besteht.

11. Verfahren gemäß Patentanspruch 1, das **dadurch gekennzeichnet ist, dass** es auch streichbare Schokoladencreme einschließt.

12. Verfahren gemäß Patentanspruch 1, das **dadurch gekennzeichnet ist, dass** es auch Schlagsahne einschließt.

13. Verfahren gemäß Patentanspruch 12, das **dadurch gekennzeichnet ist, dass** es auch auf der Schlagsahne verteilte Stücke des Marron Glace einschließt.

14. Verfahren gemäß Patentanspruch 13, das **dadurch gekennzeichnet ist, dass** die genannten Stücke des Marron Glace aus Maronen, Zucker, Glukosesirup, Vanillearoma und Spuren des Konservierungsmittels E220 bestehen.

15. Verfahren gemäß Patentanspruch 1, das **dadurch gekennzeichnet ist, dass** das genannte erhitzte Getränk in einem Glas serviert wird, dessen obere Innenwände und dessen oberer Rand mit der Schokoladencreme bestrichen sind.

16. Verfahren gemäß Patentanspruch 1, das **dadurch gekennzeichnet ist, dass** das genannte Getränk nach der Erhitzung mit einer Schicht Schlagsahne bedeckt wird.

17. Verfahren gemäß Patentanspruch 16, das **dadurch gekennzeichnet ist, dass** auf der genannten Schicht Schlagsahne die Stücke des Marron Glace verteilt werden.

## Revendications

1. Méthode pour la préparation d'une boisson alimentaire à base de crème fraîche, café et chocolat aromatisé, cette méthode comprenant les phases suivantes:
- verser 1,4 litre de crème fraîche dans un récipient;
- préparer 0,4 litre de café;
- faire fondre 120 grammes de chocolat aromatisé dans le café préparé;
- verser le café avec le chocolat aromatisé dans le récipient contenant la crème fraîche et mélanger uniformément le tout; et
- chauffer la boisson et la servir chaude.

2. Méthode selon la revendication 1, **caractérisée en ce que** la crème fraîche est constituée de crème fleurette du type U.H.T. (Ultra High Temperature).

3. Méthode selon la revendication 1, **caractérisée en ce que** ledit café est un café du type "espresso".

4. Méthode selon la revendication 1, **caractérisée en ce que** ledit chocolat aromatisé est constitué de chocolat et marrons glacés.

5. Méthode selon la revendication 4, **caractérisée en ce que** le chocolat avec marrons glacés est constitué d'un mélange de farine de châtaignes, sucre, cacao, amidon, farine de graines de guar et de sel.

6. Méthode selon la revendication 1, **caractérisée en ce que** ledit chocolat aromatisé est constitué de chocolat et d'amandes.

7. Méthode selon la revendication 6, **caractérisée en ce que** ledit chocolat avec amandes est constitué d'un mélange de granulés d'amandes, sucre, cacao, amidon, farine de graines de guar, sel et arômes.

8. Méthode selon la revendication 1, **caractérisée en ce que** ledit chocolat aromatisé et constitué de chocolat et d' "amaretti" (macarons à base d'amandes amères).

9. Méthode selon la revendication 8, **caractérisée en ce que** ledit chocolat avec "amaretti" est constitué d'un mélange de granulés de macarons "amaretti", sucre, cacao, amidon, farine de graines de guar, sel et arômes.

10. Méthode selon la revendication 1, **caractérisée en ce que** ledit chocolat aromatisé est constitué d'un mélange de chocolat et marrons glacés, chocolat et amandes, chocolat et macarons "amaretti".

11. Méthode selon la revendication 1, **caractérisée en ce qu'**il comprend aussi la crème de chocolat à tartiner.

12. Méthode selon la revendication 1, **caractérisée en ce qu'**il comprend encore de la crème fouettée chantilly.

13. Méthode selon la revendication 12, **caractérisée en ce qu'**il comprend encore des menus morceaux de marrons glacés décorant la crème chantilly.

14. Méthode selon la revendication 13, **caractérisée en ce que** lesdits menus morceaux de marrons glacés sont constitués de marrons, sucre, sirop de glucose, arôme de vanille et traces de conservant E220.

15. Méthode selon la revendication 1, **caractérisée en ce que** ladite boisson chauffée est servie dans un verre dont les parois supérieures internes et le bord sont revêtus de crème au chocolat à tartiner.

16. Méthode selon la revendication 1, **caractérisée en ce que** ladite boisson, après avoir été chauffée, est recouverte d'une couche de crème fouettée.

17. Méthode selon la revendication 16, **caractérisée en ce que** de menus morceaux de marrons glacés sont déposés sur ladite couche de crème fouettée (chantilly).
